# EUROPEAN PATENT APPLICATION

(11) **EP 1 840 996 A1**
(43) Date of publication of application: **03.10.2007**
(21) Application number: 05800498.7
(22) Date of filing: 01.11.2005
(51) Int. Cl.: H01M 8/04, H01M 8/06, F23D 14/18, F23N 5/24

(54) **SYSTEM FOR DETECTION DEVICE FOR CATALYTIC COMBUSTOR**

(30) Priority: 08.12.2004 JP 2004355431
(71) Applicant: Nissan Motor Company Limited, Kanagawa-ku Yokohama-shi, Kanagawa 221-0023 (JP)
(72) Inventor: HAMADA, Karuki, Atsugi-shi, Kanagawa 243-0192 (JP); SHOJI, Tadashi, Atsugi-shi, Kanagawa 243-0192 (JP); SAKIYAMA, Nobuo, Atsugi-shi, Kanagawa 243-0192 (JP)
(74) Representative: Grünecker, Kinkeldey, Stockmair & Schwanhäusser Anwaltssozietät
(86) International application number: PCT/JP2005/020085
(87) International publication number: WO 2006/061963

(57) **Abstract**

A controller determines whether a rate of temperature rise on an upstream side of a catalyst portion is at a determination criterion value or higher, and, when the rate of temperature rise on the upstream side of the catalyst portion is at the determination criterion value or higher, the controller determines that a combustor is in an abnormal combustion state. Therefore, an abnormal combustion state of the combustor can be detected before temperature of the combustor becomes high.

## Description

### BACKGROUND OF THE INVENTION

### 1. Field of the Invention

The present invention relates to an abnormality detection device for catalyst combustor for detecting an abnormal combustion state such as back fire.

### 2. Description of the Related Art

Generally, in a fuel cell system, in order to prevent a reduction in power generation efficiency and stoppage of power generation caused by an increase in a nitrogen concentration and a water vapor concentration on the anode electrode side, a purging treatment is performed for discharging gas and condensed water on the anode electrode side to outside the system. Further, since the gas emitted out of the system by this purging treatment (hereinafter, referred to as anode of f gas) contains unused hydrogen, fuel gas, together with nitrogen and water vapor, a treatment for diluting a hydrogen concentration by mixing other gas and the anode off gas, and a treatment for combusting hydrogen by mixing oxidant gas and the anode off gas are conducted in addition to the purging treatment.

Incidentally, when combusting unused hydrogen with oxidant gas, it is necessary to supply sufficient oxidant gas to combust hydrogen which is emitted during a normal operation. However, when an abnormality such as an increase in a hydrogen concentration in anode off gas, an increase in a flow rate of anode off gas, and a decrease in a flow rate of oxidant gas occurs, a ratio between hydrogen and oxidant gas (air-fuel ratio) in combustion gas changes, and an abnormal combustion state could occur. In addition, when a catalyst is used as a hydrogen combustion medium, back fire occurs along with an increase in combustion temperature, and the combustion state of a combustor changes from catalyst combustion to gas-phase combustion. Thereafter, once the combustion state changes to gas-phase combustion, damages to the environments including damages to the combustor, the catalyst, and the peripheral environments caused by a heat damage which occurs as combustion temperature rises, and generation of by-product gas such as NO_{X} due to high-temperature gas-phase combustion become large.

From these backgrounds, as disclosed in Japanese Patent Laid-Open Publication 2000-315516, in a conventional fuel cell system, temperature of a combustor is measured by measuring gas temperature in the downstream side of the combustor, the measured temperature and combustor temperature estimated from an operation condition are compared with each other, and an abnormal combustion state of the combustor is detected based on a result of the comparison. In addition, as disclosed in Japanese Patent Laid-Open Publication No. Heisei 11-118115, also known is a fuel cell system in which gas temperature on the upstream side of the combustor is measured, and an abnormal combustion state such as back fire is detected based on the measurement result.

### SUMMARY OF THE INVENTION

However, in a case of detecting an abnormal combustion state of a combustor by detecting gas temperature on the downstream side of the combustor, an abnormal combustion state such as back fire cannot be detected quickly. Moreover, in a case of detecting an abnormal combustion state of a combustor based only on gas temperature on the downstream side of the combustor, a type of the abnormal combustion state cannot be identified, and therefore, an appropriate measure may not be taken. Meanwhile, in a case of detecting an abnormal combustion state of a combustor by detecting gas temperature on the upstream side of the combustor, if a distance from a catalyst within the combustor to temperature detecting means is far, only back fire with a significant distance can be detected. Further, when a combustor is mounted on a vehicle, even if temperature detecting means with sufficient reliability and life is used, a response to temperature change is slow, and time required for temperature detection becomes long. Furthermore, when a combustor is mounted on a fuel cell vehicle, a quick detection is necessary since a regulated substance such as NO_{X} may be generated due to gas-phase combustion,.

The present invention has been achieved for solving the above-described problems, and an objective thereof is to provide an abnormality detection device for a catalyst combustor, which can detect an abnormal combustion state appropriately and quickly. Technical Solution

In order to solve the aforementioned problems, an abnormality detection device for a catalyst combustor according to the present invention detects an abnormal combustion state of the catalyst combustor by comparing at least one of gas temperature and a rate of temperature rise on an upstream side of a catalyst with a determination criterion value.

### BRIEF DESCRIPTION OF THE DRAWINGS

FIG. 1 is a block diagram showing a structure of a fuel cell system of an embodiment of the present invention.
FIG. 2 is a view showing time variations of gas temperature on an upstream side of a catalyst portion and a downstream side of the catalyst portion when combustion starts.
FIG. 3 is a view showing time variations of gas temperature on the upstream side of the catalyst portion and the downstream side of the catalyst portion when continuous purging is performed.
FIG. 4 is a view showing time variations of gas temperature on the upstream side of the catalyst portion and the downstream side of the catalyst portion when intermittent purging is performed.
FIG. 5 is a table showing relations between temperature of cathode off gas and a rate of temperature rise thereof, gas temperature and a rate of temperature rise on the upstream side of the catalyst portion, and gas temperature and a rate of temperature rise on the downstream side of the catalyst portion during normal combustion and abnormal combustion.
FIG. 6 is a flowchart showing a flow of an abnormality determination process of the first embodiment of the present invention.
FIG. 7 is a view showing a determination criterion value of the embodiment of the present invention.
FIG. 8 is a flowchart showing a flow of an abnormality determination process of a second embodiment of the present invention.
FIG. 9 is a flowchart showing a flow of an abnormality determinationprocess of a third embodiment of the present invention.
FIG. 10 is a view showing a determination threshold value of the embodiment of the present invention.
FIG. 11 is a flowchart showing a flow of an abnormality determination process of a fourth embodiment of the present invention.
FIG. 12 is a flowchart showing a flow of an example of a different application of the abnormality determination process shown in Fig.
11.

### DETAILED DESCRIPTION OF THE PREFERRED EMBODIMENTS

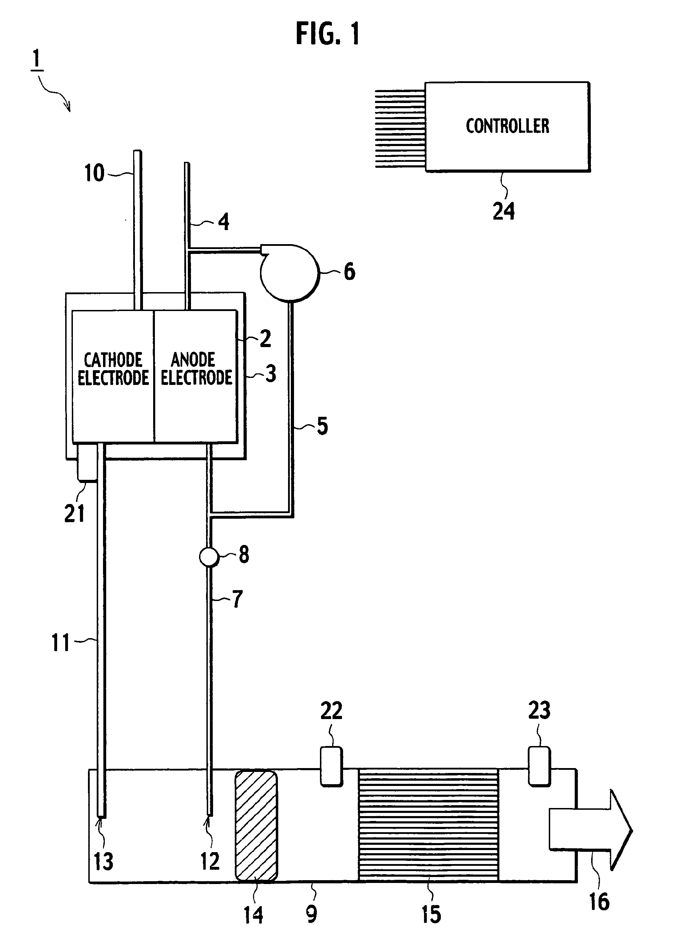

The present invention may be applied to, for example, a fuel cell system shown in Fig. 1. Hereinafter, a description is given of structure and operation of a fuel cell system of an embodiment of the present invention with reference to the drawings.

### <Structure of Fuel Cell System>

As shown in Fig. 1, the fuel cell system 1 of the embodiment of the present invention includes a fuel cell stack 3 in which multitude fuel cells 2 generate power by receiving hydrogen and air supplies to an anode electrode and a cathode electrode, respectively, are stacked. Note that electrochemical reactions in the anode electrode and the cathode electrode, and an overall electrochemical reaction in the fuel cell stack 3 are obtained from equations (1) to (3) shown below. Further, in this embodiment, hydrogen is supplied to the anode electrode, but hydrogen-rich reformed gas may be supplied to the anode electrode instead of hydrogen.

<Anode Electrode> H₂ -> 2H⁺ + 2e⁻ ... (1)

<Cathode Electrode> 1/2O₂ + 2H⁺ + 2e⁻ -> H₂O ... (2)

<Overall> H₂ + 1/2O₂ -> H₂O ... (3)

### <Structure of Hydrogen System>

The above-described fuel cell system 1 includes a hydrogen tank and a hydrogen supply valve which are not illustrated. Hydrogen is supplied to the anode electrode via a hydrogen supply pipe 4 after a hydrogen pressure within the hydrogen tank is reduced by the fuel supply valve to a pressure which corresponds to an operation state of the fuel cell 2. Further, hydrogen which is not used in the anode electrode is re-circulated to the upstream side of the anode electrode through a hydrogen re-circulation pipe 5 and a hydrogen re-circulation pump 6. By providing the hydrogen re-circulationpipe 5 and the hydrogen re-circulation pump 6, unused hydrogen in the anode electrode can be reused, and the fuel economy performance of the fuel cell system 1 can be improved. Note that, an ejector, a fluid pump, may be used instead of the hydrogen re-circulation pump 6 as long as it corresponds to the operation condition of the fuel cell 2.

Here, impurity gas such as nitrogen and water vapor contained in air which diffuse from the cathode electrode, and liquid water which is liquified excessive water may be accumulated in a re-circulation flowpass for hydrogen to return to the anode electrode via the hydrogen pipe 5 and the hydrogen pump 6. These impurity gases reduce partial pressure of hydrogen, and thus reduce power generation efficiency, or increase an average molecular weight of re-circulating gas, making hydrogen circulation difficult. In addition, liquid water interferes hydrogen re-circulation and power generation by the stack.

Therefore, on the outlet side of the anode electrode, an anode off gas pipe 7, and an anode purging valve 8 which opens and closes the anode off gas pipe 7 are provided. When the impurity gas and liquid water are accumulated, purging is performed where the anode purging valve 8 is opened, and gas exhausted from the anode purging valve 8 (hereinafter, referred to as anode off gas) is emitted out of the system after being subject to a combustion treatment in a combustor 9 by using air discharged from the cathode electrode.

Therefore, a hydrogen partial pressure and re-circulation performance within the hydrogen re-circulation pipe 5 including the anode electrode are recovered. Note that an amount of anode off gas to be emitted to the combustor 9 from the anode purging valve 8, and emission timing may be set by a designer as appropriate; for example, a given amount or an amount controlled in accordance with an operation condition is purged continuously (continuous purging), or an amount to be purged is controlled intermittently in accordance with an operation condition (intermittent purging).

### <Structure of Air System>

The aforementioned fuel cell system 1 includes a compressor and a humidifying device which are not shown, and air provided by the compressor is humidified by the humidifying device, and thereafter supplied to the cathode electrode through an air supply pipe 10. Then, air which was not used in the cathode electrode is conveyed to the combustor 9 through a cathode off gas pipe 11. Note that the air discharged from the cathode electrode maybe emitted out of the system, and a separate air may be directly supplied to the combustor 9

### <Structure of Combustor>

The above-mentioned combustor 9 is made by a cylindrical material, such as stainless steel alloy which can endure combustion temperature and pressure, and includes an anode off gas inlet 12 through which hydrogen from the anode off gas pipe 7 is supplied, a cathode off gas inlet 13 through which the air from the cathode off gas pipe 11 is supplied, a mixture formation portion 14 provided on the downstream side of the anode off gas inlet 12, a catalyst portion 15 provided on the downstream side of the mixture formation portion 14, and an exhaust pipe 16 provided on the downstream side of the catalyst portion 15. Note that the shape and material of the combustor 9 may be changed in accordance with the designer's will as long as they satisfy specified values of gas flow rate, heat value, and the like required for the fuel cell system 1.

The anode off gas inlet 12 is structured by a fuel injection pipe connected to the anode off gas pipe 7 in a state where the end side portion thereof is projecting into the combustor 9, and emits anode off gas from a fuel ejection hole formed in the end side portion. To be more specific, the anode off gas inlet 12 is structured by a 1/4-inch stainless steel pipe having a hole in the end portion thereof, and the fuel ejection hole is formed on the peripheral surface of the pipe.

Note that one fuel injection hole may be made at the center of the pipe peripheral surface, or a plurality of them maybe provided in the circumference direction. Also, regarding the fuel supply route of an inlet pipe which injects anode off gas, gas may be introduced from the upstream side of the fuel supply portion, at right angle to the flow of the fuel supply portion, or from the downstream side of the fuel supply portion. However, when gas is introduced from the downstream side, it is necessary to have a design on the basis of considerations of impacts of the inlet pipe on mixture formation, and impacts of combustion heat in the catalyst portion 15 on the inlet pipe and fuel.

Moreover, the mixture formation portion 14 is structured by using a known gas mixing technology such as a space, a swirler, and a perforated plate, and mixes hydrogen and air supplied from the anode off gas inlet 12 and the cathode off gas inlet 13, respectively. Also, the catalyst portion 15 is structured by using a known catalyst technology where a carrier, such as a metal honeycomb and a ceramic honeycomb, supports precious metal such as platinum, and combusts a mixture of hydrogen and air formed in the mixture formation portion 14.

Further, the exhaust pipe 16 is formed of a material which can endure heat of gas discharged from the combustor 9, and emits gas which was discharged from the catalyst 15 outside the system. Note that the shape of the exhaust pipe 16 maybe designed in accordance with a designer's will, and a silencer such as muffler maybe provided in the exhaust pipe 16. Furthermore , a heat exchanger maybe provided on the downstream side of the catalyst 15, and by using the heat exchanger as a heat source for a fuel reforming system, the system efficiency can be improved.

### <Structure of Control System>

The foregoing fuel cell system 1 includes a temperature sensor 21 which detects temperature T1 of air discharged from the cathode electrode (cathode off gas), a temperature sensor 22 which detects gas temperature T2 on the upstream side of the catalyst portion 15, a temperature sensor 23 which detects gas temperature T3 on the downstream side of the catalyst portion 15, and a controller 24 which controls the entire operation of the fuel cell system 1. Note that, in this embodiment, the controller 24 is structured by a microprocessor which includes a CPU, a program ROM, a working RAM, and an input/output interface.

### <Gas Temperature Changes on Upstream Side and Downstream Side of Catalyst Portion>

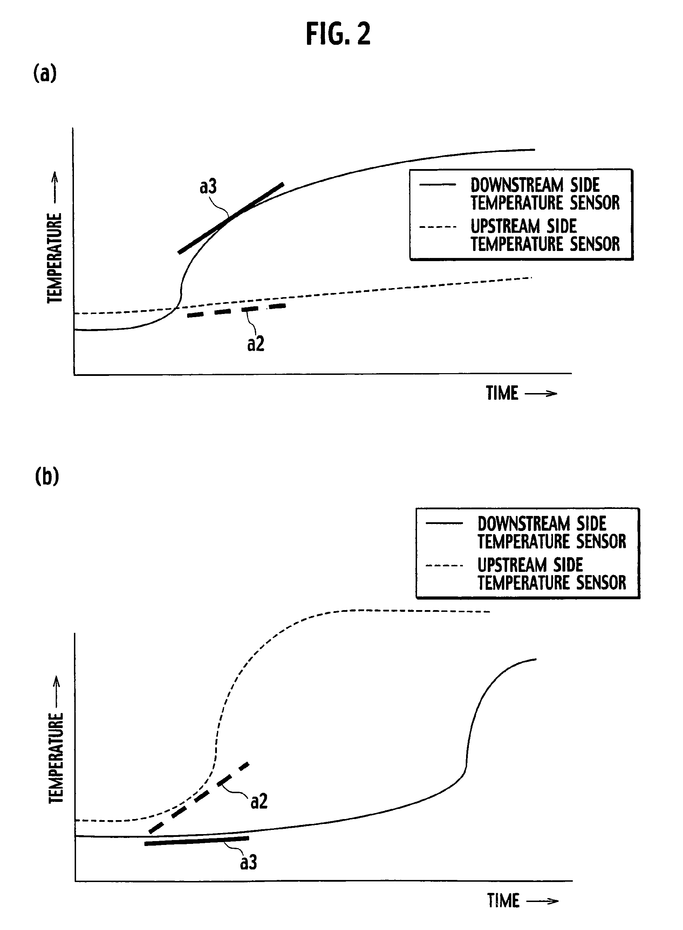

Next, with reference to Fig. 2 to Fig. 4, gas temperature changes on the upstream side and downstream side of the catalyst portion 15 (1) immediately after start of combustion and (2) during continuous purging and intermittent purging are described separately for normal combustion and abnormal combustion.

### <Temperature Changes at Start of Combustion>

First of all, gas temperature changes on the upstream side and the downstream side of the catalyst portion 15 immediately after the start of combustion are described with reference to Fig. 2. Note that, depending on the system structure and type of control, a start-up fuel treatment may be conducted when the system is activated. Namely, before the fuel cell 2 starts generating power, hydrogen and air may be supplied to the combustor 9, and a combustion treatment is performed in the catalyst portion 15. Moreover, depending on the system type, anode off gas may be discharged from the anode electrode for a certain period of time as start-up purging. Nevertheless, since gas temperature changes on the upstream side and the downstream side of the catalyst portion are still the same in these cases, temperature changes in normal star-up time will be described below as an example.

Immediately after start of fuel, when a combustion state of the combustor 9 is in a normal combustion, a reaction occurs in the catalyst portion 15, and heat is generated. Thereafter, as heat generated in the catalyst portion 15 is convected downstream of the catalyst portion 15, temperature T3 detected by the downstream side temperature sensor 23 rises, indicating combustion temperature as shown in Fig. 2 (a). Further, although temperature T2 detected by the upstream side temperature sensor 22 may rise due to heat radiation from the catalyst portion 15, the sensor generally shows temperature lower than the temperature T3 detected by the downstream temperature sensor 23, and a rate of temperature rise a2 is slower (the gradient of the curve is a2 < a3) as shown in Fig. 2(a).

Meanwhile, when the combustion state of the combustor 9 is turned into in an abnormal combustion state due to back fire, gas-phase combustion occurs in the upstream of the catalyst portion 15, combustion takes place between the anode gas inlet 12 and the catalyst portion 15, and, as shown in Fig. 2(b), the temperature T2 detected by the upstream side temperature sensor 22 rises by the heat of the combustion, and combustion temperature is indicated. Furthermore, as shown in Fig. 2(b), the temperature T3 detected by the downstream side temperature sensor 23 rises slowly because the sensor is not exposed to direct heat generated from the gas-phase combustion, and, the sensor indicates temperature lower than the gas temperature T2 on the upstream side. If the combustion continues, the detected temperature T3 increases, and a temperature difference between the detected temperature T2 and the detected temperature T3 is reduced as shown in Fig. 2(b).

### <Temperature Changes during Continuous Purging and Intermittent Purging>

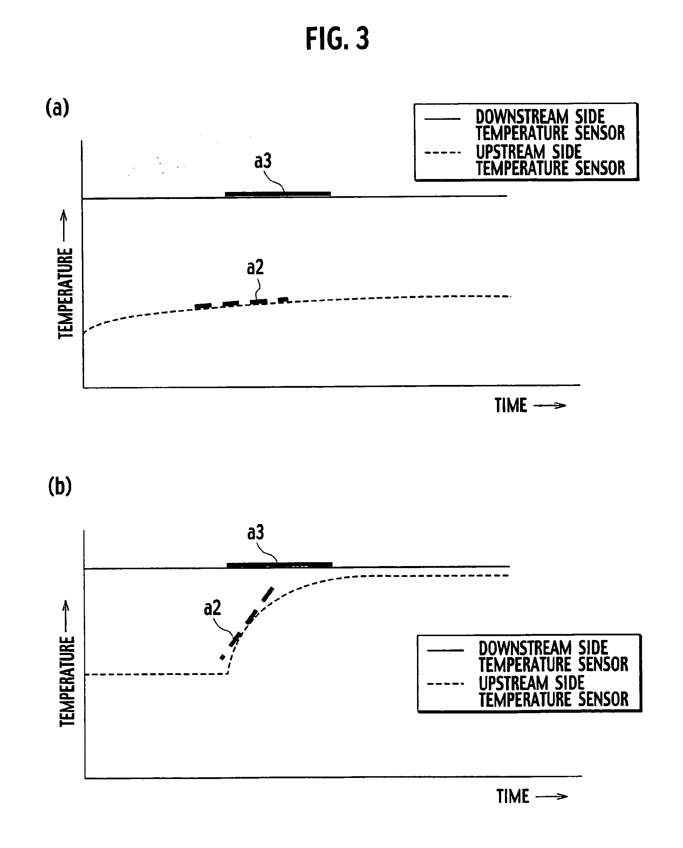

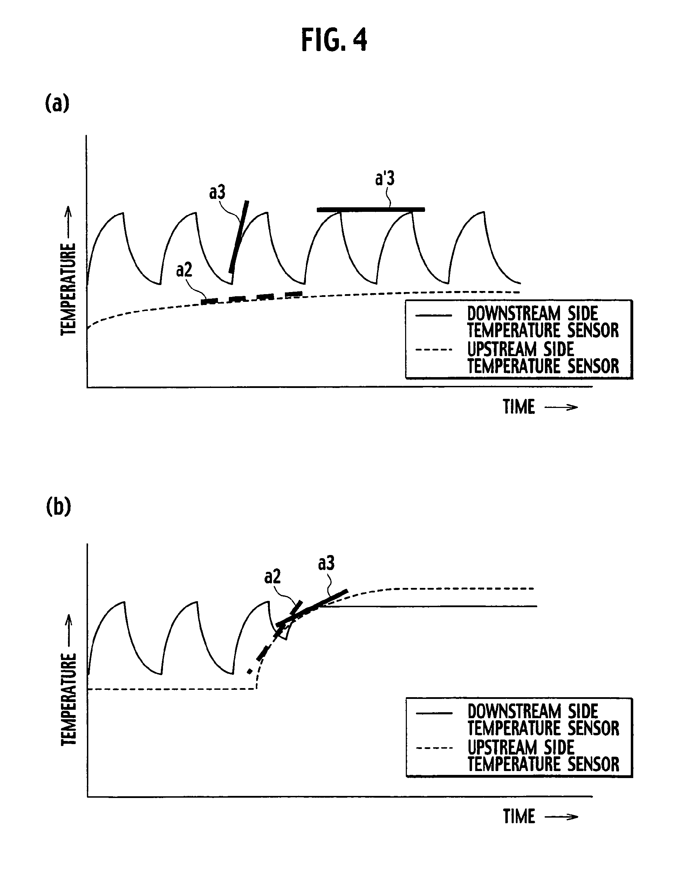

Next, gas temperature changes on the upstream side and the downstream side of the catalyst portion 15 during continuous purging and intermittent purging are described with reference to Figs. 3 and 4.

During continuous purging and intermittent purging, when the combustion state of the combustor 9 is in a normal combustion state, a reaction occurs in the catalyst portion 15, and heat is generated. Thereafter, as heat generated in the catalyst portion 15 is convected downstream of the catalyst portion 15 by a gas flow, the temperature T3 detected by the downstream side temperature sensor 23 rises as shown in Fig. 3 (a) and Fig. 4(a), and the combustion temperature is indicated. Moreover, the detected temperature T3 becomes stable temperature (during continuous purging; see Fig. 3 (a)), and varies in accordance with fuel supplies (during intermittent purging; see Fig. 4(a)) depending on a purging condition. Although the temperature T2 detected by the upstream side temperature sensor 22 may rise due to radiation heat from the catalyst portion 15, the sensor generally indicates temperature lower than the temperature T3 detected by the downstream side temperature sensor 23 as shown in Fig. 3 (a) and Fig. 4 (a), and the rate of temperature rise a2 is slower (the gradient of the curve is a2 < a3). On the other hand, when the combustion state of the combustor 9 is in an abnormal combustion state due to back fire, gas-phase combustion occurs on the upstream of the catalyst portion 15, the combustion takes place between the anode gas inlet 12 and the catalyst portion 15, the temperature T2 detected by the upstream side temperature sensor 22 rises due to the combustion, and the combustion temperature is indicated.

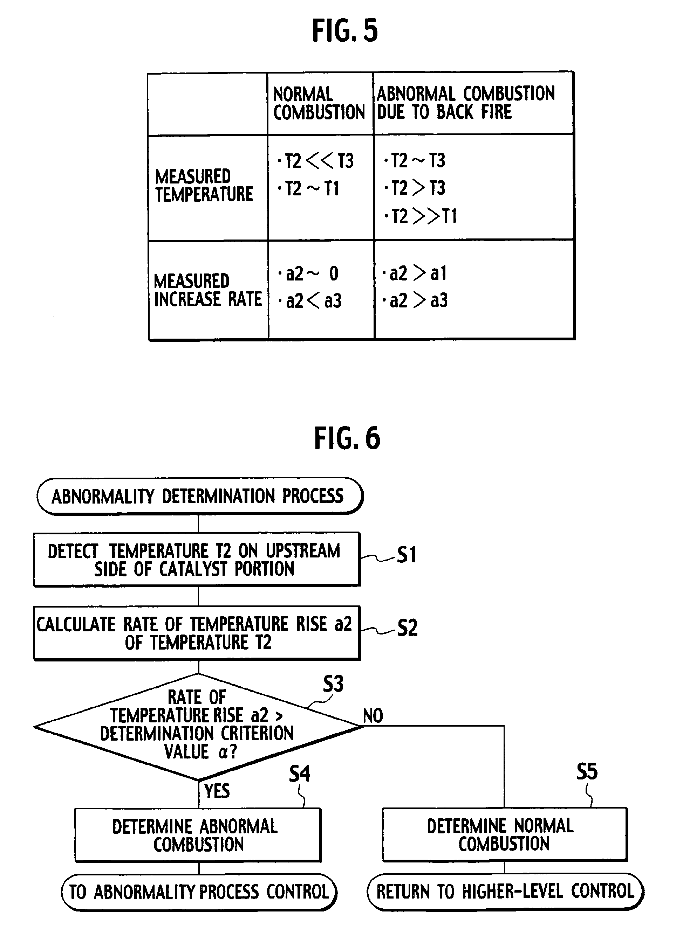

As described above, since gas temperature changes on the upstream side and the downstream side of the catalyst 15 are different during normal combustion and abnormal combustion, the combustion state of the combustor 9 can be determined by monitoring these temperature changes. Note that the relations among the temperature T1 of cathode off gas, temperatures T2 and T3 on the upstream side and the downstream side of the catalyst 15, and their rates of temperature rise a2 and a3 are as shown in the table of Fig. 5. Note that, in this case, the temperature T1 of cathode off gas is not affected by the combustion state of the combustor 9. Hereinafter, operations of the controller 24 are described for the case where abnormality determination processes of first to fourth embodiments of the present invention are executed by using the differences of gas temperature change characteristics on the upstream side and the downstream side of the catalyst 15 between normal combustion and abnormal combustion.

### <Abnormality Determination Process>

### <First Embodiment>

First of all, an operation of the controller 24 when executing an abnormality determination process of the first embodiment of the present invention is described with reference to the flowchart shown in Fig. 6.

The flowchart shown in Fig. 6 starts as the fuel cell system 1 is activated and the process shifts from a higher-level control process to an abnormality determination process, and this abnormality determination process progresses to a process of step S1. Note that it is preferred that this abnormality determination process is executed repeatedly at every given sampling interval t of approximately 100 [msec] to 1 [sec] during a period while in operation from start-up to stop of the fuel cell system 1. However, if the sampling interval t is short, the process becomes susceptible to an impact of noise and the like, and an anti-noise measure becomes necessary, while a long sampling interval t causes a delay of detection of an abnormality when an abnormality occurs, so it is preferred that a designer sets the sampling interval t in accordance with operation characteristics of the system. Further, this abnormality determination process maybe executed at given sampling interval t independently from the upper-level control, and repeats inputs into a diagnostic flag which indicates a combustion state. In this case, the controller 24 performs the higher-level control process with reference to the diagnostic flag.

In the process of step S1, the controller 24 uses the temperature sensor 22 to detect gas temperature T2 on the upstream side of the catalyst portion 15. With this, the process of step S1 completes, and the determination process proceeds to a process of step S2.

In the process of step S2, the controller 24 calculates a difference value between gas temperatures T2 detected previously and currently in the process of step S1, and calculates the rate of temperature rise a2 (= dT2/dt) by dividing the calculated difference value with the sampling interval t. Thus, the process of step S2 completes, and the determination process proceeds to step S3.

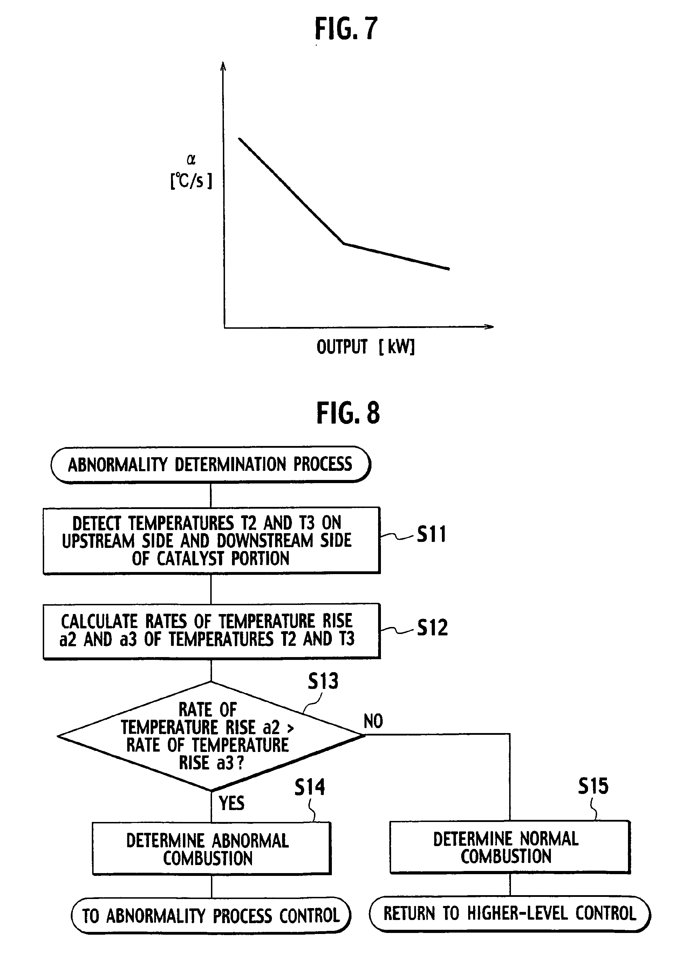

In the process of step S3 , the controller 24 determines whether the rate of temperature rise a2 calculated in the process of step S2 is equal to or higher than a determination criterion value α. Note that this determination criterion value α may be a fixed value such as 25 [°c/sec] or a value which varies in accordance with an operational load (output) of the system as shown in Fig. 7, and can be set in accordance with operation characteristics of the system or at a designer's will. Thereafter, when the determination result shows that the rate of temperature rise a2 is equal to or higher than the determination criterion value α (determination criterion A1), the controller 24 moves the determination process to a process of step S4. On the other hand, when the rate of temperature rise a2 is less than the determination criterion value α, the controller 24 moves the determination process to a process of step S5.

In the process of step S4, the controller 24 determines that the rate of temperature rise a2 of the temperature T2 is higher than a permissible rate of temperature rise which is calculated based on the operation condition of the system, and determines that the combustor 9 is in an abnormal combustion state. Thereafter, the controller 24 shifts the control to the abnormality process control for suppressing the abnormal combustion state. Note that the controller 24 may transmit a signal to the higher-level control notifying that an abnormal combustion state has occurred, or may raise an abnormal combustion determination flag, insteadof directly shifting to the abnormal process control.

In the process of step S5, the controller 24 determines that the combustor 9 is in a normal combustion state, and returns to the higher-level control by sending a signal to the higher-level control notifying that the combustor 9 is in the normal combustion state. Note that the controller 24 may return the determination process to the process of step S1 without returning back to the higher-level control.

As is clear from the above description, according to the abnormality determination process of the first embodiment of the present invention, since the controller 24 detects an abnormal combustion state of the combustor 9 using a rate of temperature rise a2 of gas temperature T2 on the upstream side of the catalyst portion 15, an abnormal combustion state of the combustor 9 can be detected appropriately and quickly.

Further, according to the abnormality determination process of the first embodiment of the present invention, since the controller 24 determines that the combustor 9 is in an abnormal combustion state when the rate of temperature rise a2 is equal to or higher than the determination criterion value α (determination criterion A1), an abnormal combustion state of the combustor 9 can be detected before temperature by the abnormal combustion becomes high.

Note that the controller 24 may determine that the combustor 9 is in an abnormal combustion state when the determination criterion A1 is satisfied, and the gas temperature T2 on the upstream side of the catalyst portion 15 is above permissible temperature specified in accordance with an operation condition (determination criterion B1). Therefore, misdiagnosis due to measurement noise or the like can be prevented, and at the same time, a determination threshold value can be reduced to a lower level than in the case of making determination by simply using temperature only, and thus time required for the abnormality determination can be reduced.

### <Second Embodiment>

Next, an operation of the controller 24 when executing an abnormality determination process of the second embodiment of the present invention is described with reference to the flowchart shown in Fig. 8.

The flowchart shown in Fig. 8 starts as the fuel cell system 1 is activated, and the process shifts from a higher-level process to an abnormality determination process, and this abnormality determination process proceeds to a process of step S11.

In the process of step S11, the controller 24 detects gas temperatures T2 and T3 on the upstream side and downstream side of the catalyst 15 by using the temperature sensors 22 and 23. Thus, the process of step S11 completes, and the determination process proceeds to a process of step S12.

In the process of step S2, the controller 24 calculates rates of temperature rise a2 and a3 (= dT3/dt) of gas temperatures T2 and T3 by calculating difference values of gas temperatures T2 and T3 detected previously and currently in the process of step S11, and then by dividing the calculated difference values with a sampling interval t. With this, the process of step S12 completes, and the determination process proceeds to a process of step S13.

In the process of step S13, the controller 24 determines whether the rate of temperature rise a2 calculated in the process of step S12 is equal to or higher than the rate of temperature rise a3. When the result of the determination shows that the rate of temperature rise a2 is equal to or higher than the rate of temperature rise a3 (determination criterion A2), the controller 24 determines that the combustor 9 is in an abnormal combustion state as a process of step S14, and the process is shifted to an abnormal process control. On the other hand, when the rate of temperature rise a2 is less than the rate of temperature rise a3, the controller 24 determines that the combustor 9 is in a normal combustion state as a process of step S15, and returns to the higher-level control. Note that the controller 24 may return the determination process to the process of step S11 without returning to the higher-level control.

As is evident from the above description, according to the abnormality determination process of the second embodiment of the present invention, since the controller 24 determines that the combustor 9 is in an abnormal combustion state when the rate of temperature rise a2 is equal to or higher than the rate of temperature rise a3 (determination criterion A2), an abnormal combustion state of the combustor 9 can be detected before temperature increases from abnormal combustion.

Note that the controller 24 may determine that the combustor 9 is in an abnormal combustion state when the rate of temperature rise a2 is equal to or higher than a determination criterion value α (determination criterion A1), and the rate of temperature rise a2 is equal to or higher than the rate of temperature rise a3 (determination criterion A2). Hence, misdiagnosis due to measurement noise and the like can be avoided.

Also, the controller 24 may determine that the combustor 9 is in an abnormal combustion state when the gas temperature T2 on the upstream side of the catalyst portion 15 becomes higher than permissible temperature (determination criterion B1), and the rate of temperature rise a2 is equal to or higher than the rate of temperature rise a3 (determination criterion A2). Hence, misdiagnosis due to measurement noise and the like can be prevented, and a determination threshold value can be reduced to a lower level than in the case of making determination by simply using temperature only, and time required for the abnormality determination is reduced.

Also, the controller 24 may determine that the combustor 9 is in an abnormal combustion state when the rate of temperature rise a2 is equal to or higher than the determination criterion value α (determination criterion A1), the rate of temperature rise a2 is equal to or higher than the rate of temperature rise a3 (determination criterion A2), and the gas temperature T2 on the upstream side of the catalyst portion 15 is above a permissible temperature specified in accordance with the operation condition (determination criterion B1). Thus, misdiagnosis due to measurement noise and the like can be prevented.

Also, the controller 24 may determine that the combustor 9 is in an abnormal combustion state when the rate of temperature rise a2 is equal to or higher than the determination criterion value α (determination criterion A1), and/or the rate of temperature rise a2 is equal to or higher than the rate of temperature rise a3 (determination criterion A2), and the gas temperature T2 on the upstream side of the catalyst portion 15 is equal to or higher than the gas temperature T3 on the downstream side of the catalyst 15 (determination criterion B2). Thus, misdiagnosis due to measurement noise and the like can be prevented.

### <Third Embodiment>

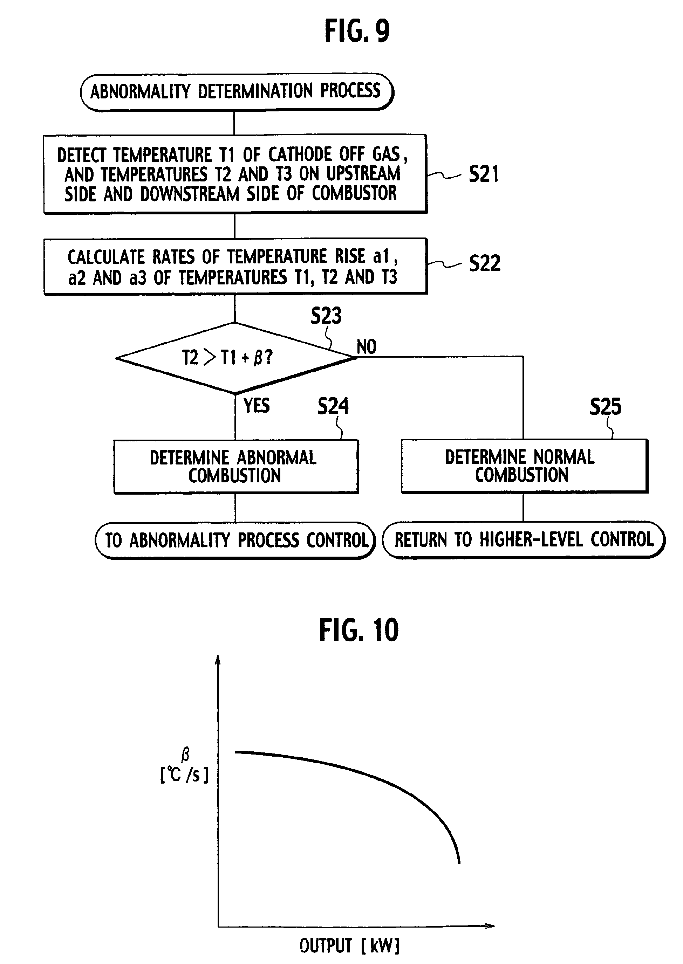

Next, an operation of the controller 24 when executing an abnormality determination process of the third embodiment of the present invention is described with reference to the flowchart shown in Fig. 9.

The flowchart shown in Fig. 9 starts as the fuel cell system 1 is activated and the process shifts from the higher-level control to the abnormality determination process, and the abnormality determination process proceeds to a process of step S21.

In the process of step S21, the controller 24 detects temperature T1 of cathode off gas, and gas temperatures T2 and T3 on the upstream side and downstream side of the catalyst 15 by using the temperature sensors 21, 22 and 23. Then, the process of step S21 completes, and the determination process proceeds to a process of step S22.

In the process of step S22, the controller 24 calculates rates of temperature rise a1 (dT1/dt), a2, and a3 of gas temperatures T1, T2, and T3 by calculating difference values of gas temperatures T1, T2 and T3 detected previously and currently in the process of step S21, and by dividing the calculated difference values with a sampling interval t. With this, the process of step S22 completes, and the determination process proceeds to a process of step S23. Note that, in the processes from this process forward, when rates of temperature rise a1, a2 and a3 are not used, the controller 24 may omit respective process.

In a process of step S23, the controller 24 determines whether the gas temperature T2 on the upstream side of the catalyst portion 15 is equal to or higher than a value obtained by adding a determination criterion threshold value β to the temperature T1 of cathode off gas. Note that the determination criterion threshold value β may be any of a fixed value or a value which varies in accordance with an operation load (output) of the system as shown in Fig. 10, and may be set in accordance with operation characteristics of the system or at a designer's will. When the result of the determination shows that the gas temperature T2 on the upstream side of the catalyst portion 15 is equal to or higher than the value obtained by adding the determination criterion threshold value β to the temperature T1 of cathode off gas (determination criterion C1), the controller 24 determines that the gas temperature T2 on the upstream side of the catalyst 15 has excessively increased, and the combustor 9 is in an abnormal state as a process of step S24, and shifts the control to an abnormality determination control. On the other hand, when the gas temperature T2 on the upstream side of the catalyst portion 15 is less than the value obtained by adding the determination criterion threshold value β to the temperature T1 of cathode off gas, the controller 24 determines that the combustor 9 is in a normal combustion state as a process of step S25, and returns to the higher-level control. Note that the controller 24 can return the determination process to the process of step S21 without returning to the higher-level control.

As is evident from the above description, according to the abnormality determination process of the third embodiment of the present invention, since the controller 24 determines that the combustor 9 is in an abnormal combustion state when the gas temperature T2 on the upstream side of the catalyst 15 is equal to or higher than the value obtained by adding the determination criterion threshold value β to the temperature T1 of cathode off gas (determination criterion C1), misdiagnosis due to operation temperature changes of the fuel cell 2 can be avoided.

Note that the controller 24 may use a difference between the rate of temperature rise a2 and the rate of temperature rise a1 of cathode off gas instead of the rate of temperature rise a2 used in determination criteria A1 and A2 (determination criteria A3 and A4). Alternatively, the controller 24 may use a temperature difference between the gas temperature T2 and the temperature T1 of cathode off gas instead of the gas temperature T2 (determination criteria B3 and B4). Further, the controller 24 may use the aforementioned determination criterion C1 in a substitution for the foregoing determination criteria B1, B2, B3 and B4. Hence, misdiagnosis due to operation temperature changes of the fuel cell can be avoided.

### <Forth Embodiment>

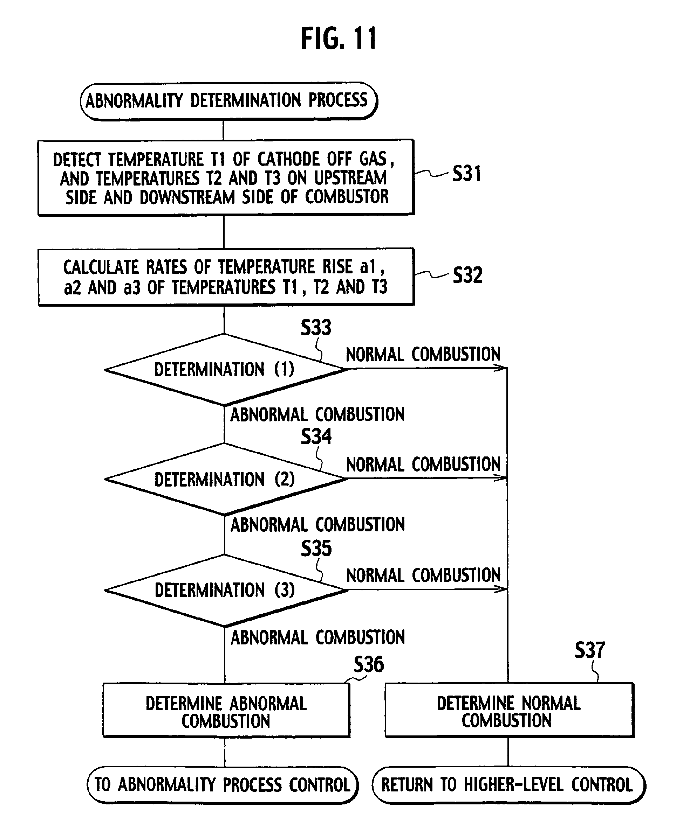

Lastly, an operation of the controller 24 when executing an abnormality determination process of the forth embodiment of the present invention is described with reference to the flowchart shown in Fig. 11.

The flowchart shown in Fig. 11 starts as the fuel cell system 1 is activated and the process shifts from a higher-level control process to an abnormality determination process, and the abnormality determination process proceeds to a process of step S31.

In the process of step S31, the controller 24 detects temperature T1 of cathode off gas, and gas temperatures T2 and T3 on the upstream and downstream of the catalyst portion 15 by using the temperature sensors 21, 22, and 23. Thus, the process of step S31 completes, and the determination process proceeds to a process of step S32.

In the process of step S32, the controller 24 calculates rates of temperature rise a1, a2, and a3 of gas temperatures T1, T2, and T3 by calculating difference values of gas temperature T1, T2 and T3 detected previously and currently in the process of step S31, and dividing the calculated difference values with a sampling interval t. With this, the process of step S32 completes, and the determination process proceeds to the process of step S33.

In the process of step S33, the controller 24 determines whether the combustor 9 is in a normal combustion state or an abnormal combustion state in accordance with a first determination criterion. Note that this first determination criterion represents a combination of any of determination criteria A1, A2, A3, A4, B1, B2, B3, B4, and C1 described above. Thereafter, when the determination result shows that the combustor 9 is in a normal combustion state, the controller 24 advances the determination process to a process of step S37. On the other hand, when the combustor 9 is in an abnormal combustion state, the controller 24 advances the determination process to a process of step S34.

In the process of step S34, the controller 24 determines whether the combustor 9 is in a normal combustion state or an abnormal combustion state in accordance with a second determination criterion. Note that the second determination criterion represents a combination of any of determination criteria A1, A2, A3, A4, B1, B2 , B3, B4, and C1 described above, except for the foregoing first determination criterion. Thereafter, when the determination result shows that the combustor 9 is in a normal combustion state, the controller 24 advances the determination process to a process of step S37. On the other hand, when the combustor 9 is in an abnormal combustion state, the controller 24 advances the determination process to a process of step S35.

In the process of step S35, the controller 24 determines whether the combustor 9 is in a normal combustion state or an abnormal combustion state in accordance with a third determination criterion. Note that the third determination criterion represents a combination of any of determination criteria A1, A2, A3, A4, B1, B2, B3, B4, and C1 described above, except for the foregoing first and second determination criteria. Then, when the determination result shows that the combustor 9 is in a normal combustion state, the controller 24 advances the determination process to a process of step S37. On the other hand, when the combustor 9 is in an abnormal combustion state, the controller 24 advances the determination process to a process of step S36.

As is evident from the above description, according to the abnormality determination process, since the controller 24 detects an abnormal combustion state of the combustor 9 in accordance with any combination of any of determination criteria A1, A2, A3, A4, B1, B2, B3, B4, and Cl, determination criteria with the least chance of misdiagnosis and short diagnosis time can be set.

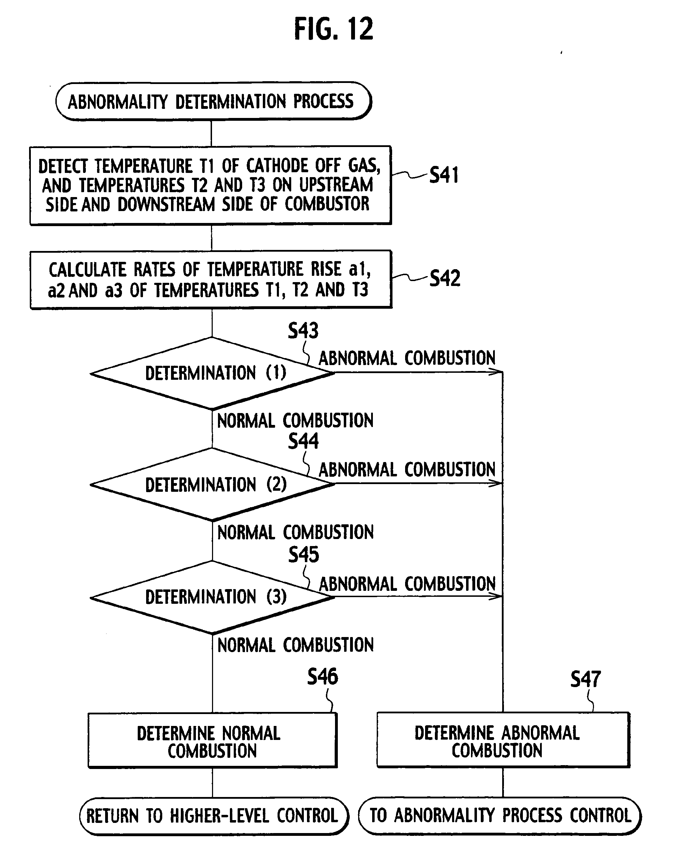

Note that, in this embodiment, although the controller 24 advanced the process to the next determination step when it is determined that the combustion 9 is in an abnormal combustion state, the controller 24 may advance the process to the next determination step it is determined that the combustor 9 is in a normal combustion state as shown in Fig. 12. Further, although the controller 24 determines the combustion state of the combustor 9 from the three determination steps, the number of steps may be 2 or more than 3.

The embodiments where the present invention achieved by the present inventors is applied are described above. However, the present invention is not limited to the descriptions and drawings which are the part of disclosure of the present invention through these embodiments. For example, in the foregoing embodiments, it is determined whether the combustor 9 is in an abnormal combustion state by one determination process, but whether the combustor 9 is in an abnormal combustion state maybe determined after performing the above abnormality determination processes more than once. To be more specific, when the abnormality determination process is executed at sampling interval of 0.1 [sec], it may be determined that the combustor 9 is in an abnormal combustion state when abnormality was confirmed 5 times in 1 [sec] (10 cycles), or when abnormality was confirmed 4 cycles (0.4 seconds) consecutively in a 0.1 [sec] cycle. According to these processes, misdiagnosis due to an influence of noise or the like can be prevented. As explained above, it shouldbe added that it is obvious that all other embodiments, examples, and application technologies made by those skilled in the art based on the aforementioned embodiments should be included in the scope of the present invention.

### Industrial Applicability

According to the present invention, since an abnormal combustion state is detected using a rate of temperature rise on the upstream side of the catalyst portion, an abnormal combustion state can be detected appropriately and quickly.

## Claims

1. An abnormality detection device for a catalyst combustor, which mixes anode off gas emitted from a fuel electrode of a fuel cell with oxidant gas in accordance with an operation state of a fuel cell system , and performs a combustion treatment for the anode off gas in an catalyst portion, comprising:
upstream side temperature measuring means for measuring gas temperature on an upstream side of the catalyst portion; and
abnormal combustion detecting means for detecting an abnormal combustion state of a catalyst combustor by comparing at least one of gas temperature or rate of temperature rise on the upstream side of a catalyst with a determination criterion value.

2. The abnormality detection device for a catalyst combustor according to claim 1, comprising:
downstream side temperature measuring means for measuring gas temperature on a downstream side of the catalyst portion,
wherein the abnormal combustion detecting means detects an abnormal combustion state of the catalyst combustor by comparing at least one of gas temperature and a rate of temperature rise on the upstream side of the catalyst portion with at least one of gas temperature and a rate of temperature rise on the downstream side of the catalyst portion.

3. The abnormality detection device for a catalyst combustor according to claim 1 or claim 2,
wherein the oxidant gas is cathode off gas emitted from an oxidant electrode of the fuel cell,
the abnormality detection device comprises cathode off gas temperature measuring means for measuring temperature of the cathode off gas, and
the abnormality detecting means detects an abnormal combustion state of the catalyst combustor by comparing at least one of the gas temperature and the rate of temperature rise on the upstream side of the catalyst portion with at least one of the gas temperature and the rate of temperature rise of cathode off gas.

4. The abnormality detection device for a catalyst combustor according to any one of claim 1 to claim 3,
wherein the abnormality detecting means determines that the catalyst combustor is in an abnormal combustion state when a first determination criterion is satisfied as the rate of temperature rise on the upstream side of the catalyst portion becomes equal to or higher than a permissible rate of temperature rise specified in accordance with an operation condition.

5. The abnormality detection device for a catalyst combustor according to any one of claim 1 to claim 3,
wherein the abnormality detecting means determines that the catalyst combustor is in an abnormal combustion state when a first determination criterion is satisfied as the rate of temperature rise on the upstream side of the catalyst portion becomes equal to or higher than a permissible rate of temperature rise specified in accordance with an operation condition, and when a second determination criterion is satisfied as the gas temperature on the upstream side of the catalyst portion becomes equal to or higher than a permissible temperature specified in accordance with an operation condition.

6. The abnormality detection device for a catalyst combustor according to claim 2 or claim 3,
wherein the abnormality detecting means determines that the catalyst combustor is in an abnormal combustion state when a third determination criterion is satisfied as a difference between the rate of temperature rise on the upstream side of the catalyst and the rate of temperature rise on the downstream side of the catalyst portion becomes equal to or higher than a rate of temperature rise specified in accordance with an operation condition.

7. The abnormality detection device for a catalyst combustor according to claim 2 or claim 3,
wherein the abnormality detecting means determines that the catalyst combustor is in an abnormal combustion state when a first determination criterion is satisfied as the rate of temperature rise on the upstream side of the catalyst portion becomes equal to or higher than a permissible rate of temperature rise specified in accordance with an operation condition, and when a third determination criterion is satisfied as a difference between the rate of temperature rise on the upstream side of the catalyst portion and the rate of temperature rise on the downstream side of the catalyst portion becomes equal to or higher than a rate of temperature rise specified in accordance with an operation condition.

8. The abnormality detection device for a catalyst combustor according to claim 2 or claim 3,
wherein the abnormality detecting means determines that the catalyst combustor is in an abnormal combustion state when a second determination criterion is satisfied as the gas temperature on the upstream side of the catalyst portion becomes equal to or higher than a permissible temperature specified in accordance with an operation condition, and when a third determination criterion is satisfied as a difference between the rate of temperature rise on the upstream side of the catalyst portion and the rate of temperature rise on the downstream side of the catalyst portion becomes equal to or higher than a rate of temperature rise specified in accordance with an operation condition.

9. The abnormality detection device for a catalyst combustor according to claim 2 or claim 3,
wherein the abnormality detecting means determines that the catalyst combustor is in an abnormal combustion state when a first determination criterion is satisfied as the rate of temperature rise on the upstream side of the catalyst portion becomes equal to or higher than a permissible rate of temperature rise specified in accordance with an operation condition, when a second determination criterion is satisfied as the gas temperature on the upstream side of the catalyst portion becomes equal to or higher than a permissible temperature specified in accordance with an operation condition, and when a third determination criterion is satisfied as a difference between the rate of temperature rise on the upstream side of the catalyst portion and the rate of temperature rise on the downstream side of the catalyst portion becomes equal to or higher than a rate of temperature rise specified in accordance with an operation condition.

10. The abnormality detection device for a catalyst combustor according to claim 2 or claim 3,
wherein the abnormality detecting means determines that the catalyst combustor is in an abnormal combustion state when a first determination criterion is satisfied as the rate of temperature rise on the upstream side of the catalyst portion becomes equal to or higher than a permissible rate of temperature rise specified in accordance with an operation condition, and/or when a third determination criterion is satisfied as a difference between the rate of temperature rise on the upstream side of the catalyst portion and the rate of temperature rise on the downstream side of the catalyst portion becomes equal to or higher than a rate of temperature rise specified in accordance with an operation condition, and when a fourth determination criterion is satisfied as the gas temperature on the upstream side of the catalyst portion becomes higher than the gas temperature on the downstream side of the catalyst portion by at least a temperature width specified by an operation condition.

11. The abnormality detection device for a catalyst combustor according to any one of claim 4 to claim 10,
wherein the abnormality detecting means determines an abnormal combustion state of the catalyst combustor by using fifth and sixth determination criteria, in substitution for the first and/or the third determination criteria, to which a difference between the rate of temperature rise on the upstream side of the catalyst portion and the rate of temperature rise of cathode off gas is applied instead of the rate of temperature rise on the upstream side of the catalyst portion in the first and third determination criteria.

12. The abnormality detection device for a catalyst combustor according to any one of claim 5, claim 8, claim9, claim 10 and claim 11,
wherein the abnormality detecting means determines an abnormal combustion state of the catalyst combustor by using seventh and eighth determination criteria, in substitution for the second and/or the fourth determination criteria, to which a difference between gas temperature on the upstream side of the catalyst combustor and temperature of cathode off gas is applied instead of the gas temperature on the upstream side of the catalyst combustor in the second and fourth determination criteria.

13. The abnormality detection device for a catalyst combustor according to claim 3,
wherein the abnormality detecting means determines that the catalyst combustor is in an abnormal combustion state when a ninth determination criterion is satisfied as the gas temperature on the upstream side of the catalyst portion increases to a temperature higher than the temperature of cathode off gas by at least a temperature width specified by an operation condition.

14. The abnormality detection device for a catalyst combustor according to any one of claim 5, claim 8, claim 9, and claim 12,
wherein the abnormality detecting means determines that the catalyst combustor is in an abnormal combustion state when a ninth determination criterion is satisfied in substitution for the second, fourth, seventh, and eighth determination criteria, as the gas temperature on the upstream side of the catalyst portion increases to a temperature higher than the temperature of cathode off gas by at least a temperature width specified by an operation condition.

15. The abnormality detection device for a catalyst combustor according to any one of claim 1 to claim 3,
wherein the abnormality detecting means detects an abnormal combustion state of the catalyst combustor by using several of determination criteria.

16. The abnormality detection device for a catalyst combustor according to any one of claim 4 to claim 15,
wherein the abnormality detecting means determines that the catalyst combustor is in an abnormal combustion state when the determination criterion is satisfied consecutively during a time period specified in accordance with an operation condition.

17. The abnormality detection device for a catalyst combustor according to any one of claim 4 to claim 15,
wherein the abnormality detecting means determines that the catalyst combustor is in an abnormal combustion state when the determination criterion is satisfied for a predetermined percentage of a time period specified in accordance with an operation condition.
